# EUROPÄISCHE PATENTSCHRIFT

(11) **EP 3 221 164 B1**
(45) Veröffentlichungstag und Bekanntmachung des Hinweises auf die Patenterteilung: **28.07.2021**
(21) Anmeldenummer: 15775728.7
(22) Anmeldetag: 09.10.2015
(51) Int. Cl.: B60G 11/08, B60G 11/107, B60G 21/05

(54) **LAGER ZUR LAGERANBINDUNG EINER QUERBLATTFEDER SOWIE ACHSE MIT EINER QUERBLATTFEDER, DIE MITTELS EINES SOLCHEN LAGERS ANGEBUNDEN IST**
BEARING FOR CONNECTING A TRANSVERSAL LEAF SPRING AND AXLE WITH A TRANSVERSAL LEAF SPRING WHICH IS CONNECTED BY SUCH A BEARING
SUPPORT DE RESSORT À LAME TRANSVERSAL ET ESSIEU AVEC UN RESSORT À LAME TRANSVERSAL QUI EST CONNECTÉ PAR UN TEL SUPPORT

(30) Priorität: 19.11.2014 DE 102014223584
(43) Veröffentlichungstag der Anmeldung: 27.09.2017
(73) Patentinhaber: Bayerische Motoren Werke Aktiengesellschaft, 80809 München (DE)
(72) Erfinder: JECMENJAK, Jurij, 85748 Garching bei München (DE)
(86) Internationale Anmeldenummer: PCT/EP2015/073381
(87) Internationale Veröffentlichungsnummer: WO 2016/078827

(56) Entgegenhaltungen:
- WO-A1-2012/175653
- DE-A1- 19 608 860
- DE-A1-102009 028 895
- DE-A1-102010 060 093
- DE-A1-102010 060 093
- DE-B- 1 028 436
- DE-C- 937 391
- DE-U1-202013 103 900
- DE-U1-202013 103 900
- GB-A- 1 091 611
- US-A- 3 605 176
- US-A1- 2012 255 295

## Beschreibung

Die Erfindung betrifft ein Lager zur Anbindung einer Querblattfeder, insbesondere einer seitlich und/oder in Fahrzeuglängsrichtung nicht-radführenden Querblattfeder, in einem zweispurigen Kraftfahrzeug im Bereich einer Fahrzeugachse, wobei das Lager derart ausgebildet ist, dass es in einem funktionsgemäßen Einbauzustand in einem Fahrzeug, zumindest innerhalb gewisser Grenzen, einen Ausgleich einer Bewegung der Querblattfeder ermöglicht, insbesondere einer Biegung und/oder einer Bewegung in Fahrzeuglängs- und/oder Fahrzeugquerrichtung, und eine Abstützung der Querblattfeder am Fahrzeugaufbau in Fahrzeughochrichtung.

Ferner betrifft die Erfindung eine Achse für Räder eines zweispurigen Kraftfahrzeugs mit einer Querblattfeder, wobei die Querblattfeder mittels wenigstens eines Lagers angebunden ist, vorzugsweise am Fahrzeugaufbau.

Achsen mit einer Querblattfeder, d. h. mit einer sich im Wesentlichen in Fahrzeugquerrichtung erstreckenden Blattfeder, sind aus dem Stand der Technik grundsätzlich bekannt, beispielsweise aus der DE-AS 1 028 436 oder der DE-PS 937 391. Die Querblattfeder ist bei derartigen Achsen in der Regel mittels eines in der Fahrzeugmitte angeordneten Lagers oder mittels zweier, jeweils symmetrisch außermittig angeordneten Lagern am Fahrzeugaufbau angebunden. Es ist bekannt, beispielsweise aus der vorgenannten DE-PS 937 391 oder der DE-AS 1 028 436, dass für eine optimale Funktion der Querblattfeder die Biegung der Querblattfeder nicht behindert werden sollte. Dazu sollte die Anbindung der Querblattfeder derart ausgebildet sein, dass geringe Querverschiebungen der Querblattfeder, d.h. Verschiebungen in Fahrzeugquerrichtung, möglich sind. Dies kann insbesondere durch entsprechend ausgestaltete Lager erreicht werden. Es ist bekannt, hierfür die Querblattfeder mittels Lagern am Fahrzeugaufbau anzubinden, welche in Fahrzeughochrichtung, d.h. in z-Richtung, nahezu steif sind, aber zumindest in gewissen Grenzen nachgiebig in Fahrzeugquerrichtung, d.h. in y-Richtung. Je nachdem, ob Längskräfte abgestützt werden sollen oder ob auch eine Nachgiebigkeit in Fahrzeuglängsrichtung, d.h. in x-Richtung, erwünscht ist, kann das Lager in Fahrzeuglängsrichtung steif oder entsprechend nachgiebig ausgebildet sein.

Es sind unterschiedliche Lager bekannt, welche eine derartige Anbindung ermöglichen, sowohl für radführende Querblattfedern, d.h. für Seiten- bzw. Querkräfte abstützende Querblattfedern, als auch für nicht radführende Querblattfedern, beispielsweise aus der bereits erwähnten DE-AS 1 028 436, der ebenfalls bereits erwähnten DE-PS 937 391 oder der WO 2011/023546 A1.

Insbesondere jedoch zeigt die DE 10 2010 060093 A1 eine Radaufhängung mit einer Querblattfeder und einem Lager nach dem Oberbegriff des vorliegenden Patentanspruchs 1. Weiterhin zeigt die DE 20 2013 103 900 U1 ein Blattfederlager für ein Fahrzeug mit einer Querblattfeder, dessen Lagerplatten mit einem elastischen Material ummantelt sind.

Aufgabe der vorliegenden Erfindung ist es, ein Lager nach dem Oberbegriff des Anspruchs 1 dahingehend weiter zu bilden, dass bei Lagerbewegungen ein Ausgleich für Höhenänderungen senkrecht zur genannten Kontaktfläche ermöglicht wird. Die Lösung dieser Aufgabe ergibt sich mit den kennzeichnenden Merkmalen des Anspruchs 1 sowie für eine Fahrzeugachse mit den Merkmalen von Anspruch 5

Das Lager weist erfindungsgemäß von der Kontaktfläche abgewandten Seite der jeweiligen Lagerplatte eine Elastomerschicht auf, wobei die Elastomerschicht derart ausgebildet ist, dass sie in einem funktionsgemäßen Einbauzustand des Lagers in einem Fahrzeug einen Ausgleich einer Veränderung eines Abstandes der beiden Lagerplatten zueinander infolge einer Bewegung der Querblattfeder ermöglicht.

Erfindungsgemäß weist das Lager jeweils auf beiden Lagerplatten auf der von der Kontaktfläche abgewandten Seite eine Elastomerschicht auf.

Beim Ausgleich der Bewegung der Querblattfeder kommt es nämlich infolge des Abwälzens des Wälzkörpers auf der bzw. den Kontaktflächen zu einer Veränderung des Abstands der Kontaktflächen und damit der Lagerplatten, d.h. das Lager "pumpt", insbesondere in Normalenrichtung zu den Kontaktflächen bzw. je nach Einbaulage in Fahrzeughochrichtung. Und die Elastomerschicht ermöglicht einen entsprechenden Toleranzausgleich der Lagerbewegung, d.h. mittels der Elastomerschicht kann, bei entsprechender Ausgestaltung der Elastomerschicht, das "Pumpen" des Lagers reduziert bzw. ausgeglichen werden.

Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Ein erfindungsgemäßes Lager ist zunächst dadurch gekennzeichnet, dass das Lager, bezogen auf einen funktionsgemäßen Einbauzustand in einem Kraftfahrzeug, eine obere Lagerplatte mit einer Kontaktfläche, eine untere Lagerplatte mit einer Kontaktfläche und einen zwischen der oberen und der unteren Lagerplatte angeordneten Wälzkörper aufweist, wobei der Wälzkörper in einem funktionsgemäßen Einbauzustand des Lagers in einem Fahrzeug zum Ausgleich einer Bewegung der Querblattfeder auf der Kontaktfläche wenigstens einer Lagerplatte abwälzen kann.

Bevorzugt ist das Lager derart ausgebildet, dass in einem funktionsgemäßen Einbauzustand der Ausgleich einer Biegung der Querblattfeder und/oder einer Bewegung in Fahrzeugquerrichtung bewirkt wird, indem der Wälzkörper beim Abwälzen um eine parallel zur XZ-Ebene verlaufende Achse rotiert, insbesondere um eine parallel zur Fahrzeuglängsrichtung verlaufende Achse, wobei der Wälzkörper vorzugsweise um eine parallel zur Fahrzeuglängsrichtung verlaufende Achse rotiert, wenn die Querblattfeder annähernd horizontal verbaut ist, d.h. wenn die Querblattfeder derart verbaut ist, dass ihre Federblätter in etwa parallel zur Fahrbahnebene angeordnet sind. Ist die Querblattfeder hingegen leicht um die y-Achse geneigt bzw. leicht um die y-Achse gekippt verbaut, rotiert der Wälzkörper bevorzugt um eine parallel zur XZ-Ebene verlaufende Achse.

Bevorzugt ist das Lager derart ausgebildet, dass in einem funktionsgemäßen Einbauzustand in einem Kraftfahrzeug zum Ausgleich der Bewegung der Querblattfeder, insbesondere bei einer durch ein Ein- oder Ausfedern verursachten Biegung der Querblattfeder, der Wälzkörper in Fahrzeugquerrichtung abwälzen kann, so dass das Lager in Fahrzeugquerrichtung, d.h. in y-Richtung entsprechend nachgiebig bzw. weich ist.

Besonders bevorzugt ist das Lager derart ausgebildet, dass in einem funktionsgemäßen Einbauzustand des Lagers wenigstens eine Lagerplatte einer Neigung der Querblattfeder folgen kann, d.h. dass sich wenigstens eine Lagerplatte "mitneigen" kann, wenn sich die Querblattfeder durchbiegt, wobei vorzugsweise die beiden Lagerplatten, zumindest innerhalb gewisser Grenzen, gegeneinander neigbar sind.

Mit einem erfindungsgemäßen Lager, bei dem der Wälzkörper beim Abwälzen um eine parallel zu einer XZ-Ebene verlaufenden Achse rotiert und sich in Fahrzeugquerrichtung bewegt, und bei dem wenigstens eine Lagerplatte der Neigung der Querblattfeder folgen kann, kann besonders vorteilhaft eine Behinderung der Biegung und/oder der Bewegung der Querblattfeder in Fahrzeugquerrichtung vermieden werden

Für einen Ausgleich einer Bewegung der Querblattfeder in Fahrzeuglängsrichtung kann das Lager derart eingebaut werden, dass der Wälzkörper beim Abwälzen um eine parallel zu einer YZ-Ebene verlaufende Achse rotiert, insbesondere um eine parallel zur Fahrzeugquerrichtung verlaufende Achse. Dazu muss das erfindungsgemäße Lager lediglich um 90 Grad verdreht um die Z-Achse gegenüber der zuvor beschriebenen Ausgestaltung angeordnet werden.

Ein erfindungsgemäßes Lager ermöglicht somit, je nach Einbaulage, den Ausgleich einer Biegung der Querblattfeder und/oder den Ausgleich einer Bewegung der Querblattfeder in Fahrzeuglängs- und/oder Fahrzeugquerrichtung.

Erfindungsgemäß ist das Lager derart ausgebildet, dass der Wälzkörper auf den Kontaktflächen beider Lagerplatten abwälzt.

Das Lager muss dabei nicht derart ausgebildet sein, dass der Wälzkörper über seinem gesamten Umfang abwälzen kann. Es reicht aus, wenn der Wälzkörper sich derart weit über seinen Umfang abwälzen kann, dass das Lager eine ausreichend große Ausgleichsbewegung ermöglicht. Selbstverständlich kann das Lager, insbesondere der Wälzkörper, auch derart ausgebildet sein, dass er über seinen gesamten Umfang abwälzen kann. Es versteht sich von selbst, dass der Lagerkörper gegen Herausfallen gesichert ist.

Bevorzugt sind die Lagerplatten und der Wälzkörper in Fahrzeughochrichtung, d.h. in z-Richtung, nahezu steif. Besonders bevorzugt ist das Lager derart ausgebildet, dass es weich in x- und/oder y-Richtung ist, aber steif in z-Richtung.

Für eine ausreichende Steifigkeit des Lagers in z-Richtung, bezogen auf einen funktionsgemäßen Einbauzustand des Lagers, ist wenigstens eine Lagerplatte, vorzugsweise beide Lagerplatten, und/oder der Wälzkörper aus einem relativ steifen Material hergestellt, beispielsweise aus Metall, einem faserverstärkten Kunststoff oder dergleichen.

Besonders bevorzugt ist wenigstens eine Kontaktfläche und/oder der Wälzkörper aus Metall hergestellt oder mit Metall beschichtet, insbesondere aus Stahl oder Aluminium, denn Metall hat sich als besonders vorteilhaft in Bezug auf die auftretenden Flächenpressungen erwiesen, da mit Kontaktflächen aus Metall und/oder einem Wälzkörper aus Metall größere Flächenpressungen ertragen werden können.

Selbstverständlich können die Kontaktfläche, die Lagerplatten und der Wälzkörper auch aus einem anderen Material hergestellt sein. Die Lagerplatte kann auch die Kontaktfläche bilden. Wichtig ist lediglich, dass die einzelnen Lagerkomponenten entsprechend den Anforderungen ausgelegt sind und den auftretenden Belastungen standhalten können, insbesondere in Bezug auf die auftretenden Flächenpressungen.

Erfindungsgemäß ist das Lager als bewegliches Linienlager und als Rollenlager ausgebildet.

Ein Linienlager ist dabei ein Lager, das die auftretenden Lagerkräfte zumindest teilweise entlang einer Linie abstützt, der sogenannten Kontaktlinie. Ein bewegliches Linienlager ist ein Linienlager mit einer beweglichen Kontaktlinie, d.h. einer in ihrer Position veränderlichen Kontaktlinie.

Bei einem erfindungsgemäßen Lager, das als bewegliches Linienlager ausgebildet ist, sind der Wälzkörper und wenigstens eine Kontaktfläche vorzugsweise derart ausgebildet, dass der Wälzkörper in einem Normalbetrieb des Lagers beim Abwälzen entlang einer Kontaktlinie an wenigstens einer Kontaktfläche anliegt.

Bevorzugt weist ein Linienlager einen oder mehrere, hintereinander angeordnete, vorzugsweise längliche, Wälzkörper auf, insbesondere Rollen oder Kalotten, wobei die Wälzkörper derart angeordnet sind, dass die Kontaktlinien, mit denen sie an der Kontaktfläche anliegen, eine Gerade bilden, d.h. entlang einer gemeinsamen Gerade verlaufen. Ist der Wälzkörper eine Rolle bzw. sind die Wälzkörper Rollen, handelt es sich um ein Rollenlager.

Als besonders vorteilhaft hat sich ein Rollenlager mit einem einzigen Wälzkörper erwiesen, der entlang der Kontaktlinie einen kreisförmigen Querschnitt aufweist, insbesondere mit einem zylinderförmigen oder hantelförmigen Wälzkörper.

Selbstverständlich kann der Wälzkörper auch einen anderen Querschnitt als einen kreisförmigen Querschnitt aufweisen, beispielsweise einen kreisringförmigen Querschnitt, einen ovalen oder tropfen- bzw. nockenförmigen Querschnitt. D.h. der Wälzkörper kann im Bereich der Kontaktlinie rund, oval, exzentrisch oder dergleichen ausgebildet sein.

In einer bevorzugten Ausgestaltung des Lagers ist wenigstens eine Kontaktfläche eben, besonders bevorzugt beide. Die Kontaktflächen können aber auch gekrümmt sein, insbesondere konvex oder konkav. Dabei können die Kontaktflächen auch unterschiedliche Krümmungen aufweisen, d.h. eine Kontaktfläche kann beispielsweise eben sein und eine konkav oder konvex oder eine Kontaktfläche ist konkav und eine konvex.

Durch die Wahl der Form und Größe des Wälzkörpers sowie der Krümmung der Kontaktflächen kann das Lagerverhalten beeinflusst werden, insbesondere die Ausgleichsbewegung, so dass das Lagerverhalten an die Querblattfeder optimal angepasst werden kann, insbesondere an deren Biegeverhalten. Im übrigen ist alternativ und/oder zusätzlich zur vorgeschlagenen Elastomerschicht ein Toleranzausgleich auch denkbar durch eine Abstimmung der Geometrien von Kontaktflächen und Wälzkörper aufeinander, so dass sich eine entsprechende Abwälzkurve einstellt, mit welcher ein "Pumpen" des Lagers vermieden werden kann, beispielsweise in dem ein ovaler, exzentrischer oder entsprechend der gewünschten Abwälzkurve geformter Wälzkörper eingesetzt wird und/oder in dem eine Kontaktfläche entsprechend der gewünschten Abwälzkurve gekrümmt, insbesondere konvex oder konkav ausgebildet ist.

Erfindungsgemäß sind die obere Lagerplatte und die untere Lagerplatte durch ein Elastomer miteinander verbunden, wobei das Elastomer dazu ausgebildet ist, den Wälzkörper seitlich gegen Herausfallen zu sichern, insbesondere gegen ein Herausfallen in x- und/oder y-Richtung, bezogen auf einen funktionsgemäßen Einbauzustand in einem Kraftfahrzeug.

Um den Wälzkörper gegen herausfallen zu sichern, ist das Elastomer bevorzugt an den Wälzkörper in einem Bereich anvulkanisiert, wobei das Elastomer dabei bevorzugt derart am Wälzkörper anvulkanisiert ist, dass eine Abwälzbewegung zumindest innerhalb der Grenzen, in denen ein Ausgleich der Bewegung der Querblattfeder in Fahrzeuglängs- und/oder Fahrzeugquerrichtung erforderlich ist, nicht behindert wird.

Selbstverständlich kann der Wälzkörper auch auf andere Art und Weise gegen Herausfallen gesichert sein, insbesondere durch Formschluss. Dazu können beispielsweise entsprechende Führungsleisten oder dergleichen vorgesehen sein. Aber auch der Wälzkörper kann entsprechend ausgestaltet sein. Mit einem hantelförmigen Wälzkörper kann, bezogen auf einen funktionsgemäßen Einbauzustand des Lagers, beispielsweise ein Herausfallen in x-Richtung, d.h. in Fahrzeuglängsrichtung, vermieden werden.

Besonders bevorzugt sind die Elastomerschicht, welche einen Ausgleich einer Veränderung des Abstandes der beiden Lagerplatten zueinander infolge einer Bewegung der Querblattfeder ermöglicht, und das Elastomer, welches die Lagerplatten miteinander verbindet, einstückig ausgebildet.

In einer bevorzugten Ausgestaltung ist das Lager mit einer vom Wälzkörper abgewandten Seite der einen Lagerplatte zur Anbindung an der Querblattfeder ausgebildet und mit einer vom Wälzkörper abgewandten Seite der anderen Lagerplatte vorzugsweise zur Anbindung am Fahrzeugaufbau.

Dabei kann das Lager bevorzugt sowohl direkt an der Karosserie oder an einem Achsträger als auch indirekt befestigt werden, beispielsweise über einen Halter oder dergleichen.

Selbstverständlich ist auch denkbar, dass Lager zur Anbindung einer Querblattfeder an anderen Bauteilen als dem Fahrzeugaufbau einzusetzen, beispielsweise zur Anbindung einer Querblattfeder an einem radführenden Bauteil wie einem Lenker oder dergleichen, insbesondere zur Anbindung einer Querblattfeder an einem unteren Querlenker oder an einem Radträger.

Bevorzugt ist das Lager mit der Querblattfeder verbindbar, besonders bevorzugt durch aufvulkanisieren oder kleben. Zum Aufvulkanisieren ist die der Querblattfeder zugewandte, äußerste Lagerschicht vorzugsweise eine Elastomerschicht.

Das Lager kann selbstverständlich alternativ oder zusätzlich durch Klemmen, beispielsweise mittels einer Klemmvorrichtung, an der Querblattfeder befestigt werden.

Selbstverständlich kann das Lager auf diese Weise auch am Fahrzeugaufbau oder an anderen Bauteilen, wie beispielsweise einem unteren Querlenker, befestigt werden.

Eine erfindungsgemäße Achse ist dadurch gekennzeichnet, dass das Lager, mit dem die Querblattfeder angebunden ist, ein vorbeschriebenes, erfindungsgemäßes Lager ist.

Die Querblattfeder ist dabei bevorzugt mittels wenigstens eines erfindungsgemäßen Lagers am Fahrzeugaufbau angebunden. Selbstverständlich kann die Querblattfeder mittels eines erfindungsgemäßen Lagers auch an anderen Bauteilen als am Fahrzeugaufbau angebunden sein, beispielsweise an einem radführenden Bauteil wie einem Lenker oder dergleichen, insbesondere an einem unteren Querlenker oder an einem Radträger.

Eine Achse, bei welcher die Querblattfeder mittels es ähnlich wirkenden Lagers an einem unteren Querlenker angebunden ist, ist aus der zum Zeitpunkt der Anmeldung noch nicht veröffentlichten DE 102014223576.6 (EM28004) derselben Anmelderin bekannt.

Die Achse kann dabei eine Vorderachse oder eine Hinterachse sein und als lenkbare oder nicht-lenkbare Achse ausgebildet sein. Die Querblattfeder kann einteilig oder mehrteilig ausgebildet sein und durchgehend ausgebildet sein, d.h. eine linke Hälfte der Achse mit einer rechten Hälfte der Achse verbinden, oder jeweils nur mit der linken Hälfte oder der rechten Hälfte der Achse verbunden sein.

In einer bevorzugten Ausgestaltung ist die Querblattfeder über zwei außermittige, jeweils erfindungsgemäße Lager am Fahrzeugaufbau angebunden, wobei die Querblattfeder vorzugsweise durchgehend ausgebildet ist.

Bevorzugt weist die Achse dazu wenigstens zwei erfindungsgemäße Lager auf, wobei vorzugsweise zwei Lager ein Lagerpaar bilden und in einem funktionsgemäßen Einbauzustand der Achse in einem zweispurigen Fahrzeug eines der Lager des Lagerpaars oberhalb der Querblattfeder angeordnet ist und das andere Lager unterhalb der Querblattfeder und die Querblattfeder sich zwischen den Lagern in Fahrzeugquerrichtung hindurch erstreckt.

Bevorzugt sind dabei wenigstens zwei Lager unmittelbar übereinander angeordnet und bilden ein Lagerpaar, wobei die Querblattfeder besonders bevorzugt über zwei derartige Lagerpaare am Fahrzeugaufbau angebunden ist.

Besonders bevorzugt weist die Achse wenigstens vier erfindungsgemäße Lager auf, wobei jeweils zwei Lager ein Lagerpaar bilden und unmittelbar übereinander angeordnet sind und sich die Querblattfeder jeweils zwischen den zwei Lagern eines Lagerpaares hindurcherstreckt, wobei die beiden Lagerpaare vorzugsweise außermittig angeordnet sind, insbesondere symmetrisch zu einer Fahrzeugmitte.

In einer bevorzugten Ausgestaltung weist die Achse zur Anbindung der Lager vorzugsweise einen entsprechenden Halter auf, insbesondere einen C-förmigen bzw. bogenförmigen Halter auf, mit welchem beide Lager in einem funktionsgemäßen Einbauzustand in Fahrzeughochrichtung am Fahrzeugaufbau abgestützt werden können.

Im übrigen kann der Halter auch derart ausgebildet sein, dass er einen Ausgleich der Veränderung des Abstandes der beiden Lagerplatten zueinander ermöglicht, d.h. einen Ausgleich des "Pumpens" des Lagers.

Diese und weitere Merkmale gehen außer aus den Ansprüchen und aus der Beschreibung auch aus den Zeichnungen hervor, wobei die einzelnen Merkmale jeweils für sich allein oder zu mehreren in Form von Unterkombinationen bei einer Ausführungsform der Erfindung verwirklicht sein und vorteilhafte sowie für sich genommen schutzfähige Ausführungen darstellen können, für die hier Schutz beansprucht wird. Sämtliche, nur im Zusammenhang mit dem Lager beschriebene Merkmale können selbstverständlich auch bei einer erfindungsgemäßen Achse verwirklicht sein.

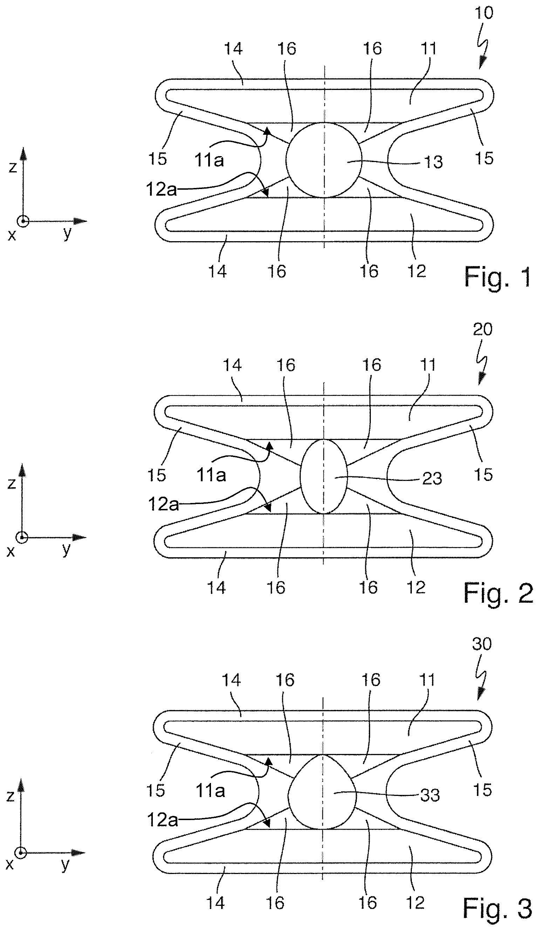

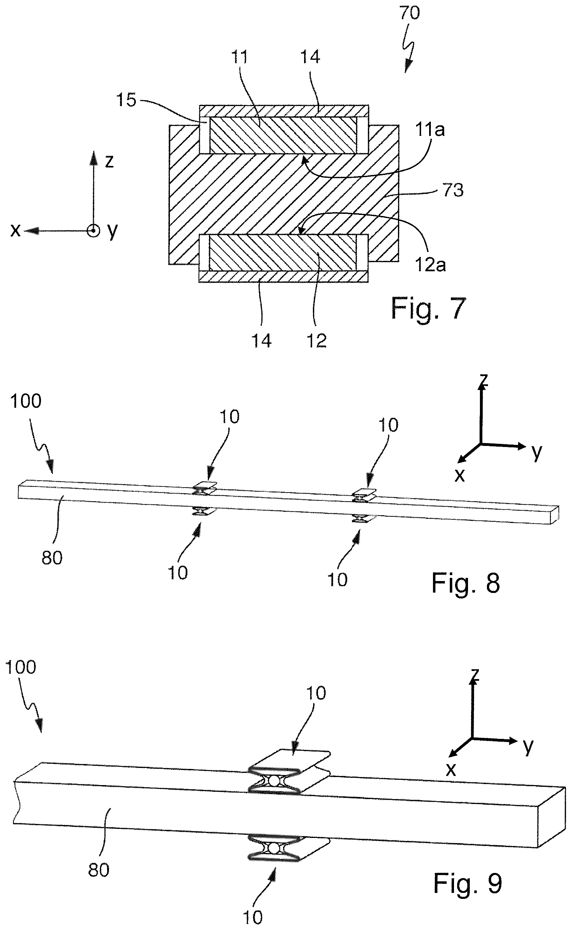

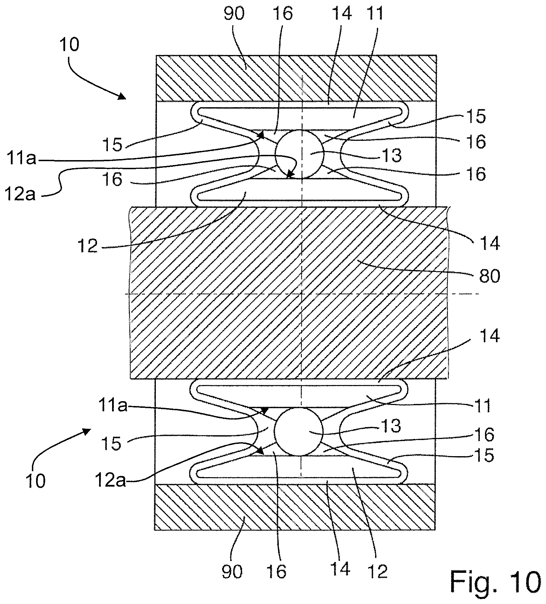

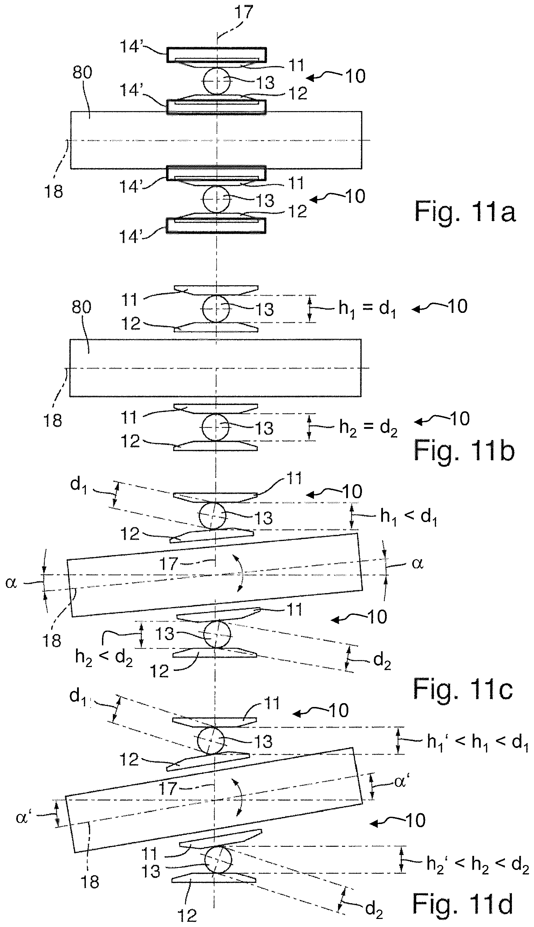

Im Folgenden wird die Erfindung anhand bevorzugter Ausführungsbeispiele weiter erläutert, wobei die Erfindung dazu in den beigefügten Zeichnungen schematisch dargestellt ist. **Fig. 1** zeigt einen Schnitt durch ein erstes Ausführungsbeispiel eines erfindungsgemäßen Lagers in Fahrzeugquerrichtung, bezogen auf einen funktionsgemäßen Einbauzustand und die **Fig. 2, Fig. 3****,** **Fig. 4, Fig. 5** und **Fig. 6** jeweils ein weiteres Ausführungsbeispiel eines erfindungsgemäßen Lagers, ebenfalls in Schnittdarstellung. **Fig. 7** zeigt ein siebtes Ausführungsbeispiel eines erfindungsgemäßen Lagers, allerdings in einem Schnitt in Fahrzeuglängsrichtung, bezogen auf einen funktionsgemäßen Einbauzustand. **Fig. 8** zeigt eine Querblattfeder mit vier erfindungsgemäßen Lagern für eine erfindungsgemäße Achse, **Fig. 9** einen vergrößerten Ausschnitt aus Fig. 8 und in **Fig. 10** ist ein Ausführungsbeispiel zur Lageranbindung einer Querblattfeder mittels erfindungsgemäßer Lager am Fahrzeugaufbau dargestellt. Die Fig. **11a bis 11d** zeigen jeweils einen Schnitt in Fahrzeugquerrichtung einer zwischen zwei erfindungsgemäßen Lagern aufgenommenen Querblattfeder in verschiedenen Verformungszuständen der Querblattfeder und damit die Lager in verschiedenen Ausgleichszuständen. Erfindungswesentlich können dabei sämtliche näher beschriebenen Merkmale sein.

Das in Fig. 1 dargestellte, erste Ausführungsbeispiel eines erfindungsgemäßen Lagers 10 in Form eines Rollenlagers 10 weist eine obere Lagerplatte 11 aus Metall, in diesem Fall aus gehärtetem Stahl, eine untere Lagerplatte 12, ebenfalls aus gehärtetem Stahl, sowie einen zylinderförmigen Wälzkörper 13 in Form einer Rolle 13 auf, der zwischen den beiden Lagerplatten 11 und 12 angeordnet ist und ebenfalls aus gehärtetem Stahl ausgebildet ist. Dabei weisen die obere Lagerplatte 11 und die untere Lagerplatte 12 jeweils eine dem Wälzkörper 13 zugewandte Kontaktfläche 11a bzw. 12a auf, auf welcher der Wälzkörper 13 jeweils abwälzen kann.

Bei diesem Lager 10, das als Rollenlager ausgebildet ist, mit einer zylindrischen Rolle 13 als Wälzkörper 13, handelt es sich um ein bewegliches Linienlager, bei dem der Wälzkörper 13 jeweils auftretende Kräfte in Hochrichtung, d.h. in z-Richtung, bzw. in Fahrzeughochrichtung, bezogen auf einen funktionsgemäßen Einbauzustand in einem Kraftfahrzeug, jeweils entlang einer, in diesem Fall senkrecht zur Zeichenebene bzw. in x-Richtung verlaufenden Kontaktlinie an der oberen Lagerplatte 11 bzw. der unteren Lagerplatte 12 abstützt.

Da sich beim Abwälzen des Wälzkörpers 13 auf den Kontaktflächen 11a und 12a der beiden Lagerplatten 11 und 12 die Kontaktlinie jeweils seitlich bewegt, d.h. in diesem Fall in y-Richtung bzw. in einem funktionsgemäßen Einbauzustand in einem Kraftfahrzeug in Fahrzeugquerrichtung, wird ein derartiges Lager 10 auch als ein bewegliches Linienlager bezeichnet.

Auf einer von der Kontaktfläche 11a bzw. 12a abgewandten Seite der oberen Lagerplatte 11 sowie der unteren Lagerplatte 12 weist das Lager 10 jeweils eine Elastomerschicht 14 auf. Die Elastomerschicht 14 ist dabei derart ausgebildet ist, dass sie in einem funktionsgemäßen Einbauzustand des Lagers 10 in einem Kraftfahrzeug einen Ausgleich einer Veränderung eines Abstandes der beiden Lagerplatten 11 und 12 zueinander ermöglicht und damit einen Ausgleich sich infolge einer Bewegung der Querblattfeder und der damit resultierenden Ausgleichsbewegung des Lagers 10 ändernden Lagerhöhe, was im weiteren Verlauf anhand der Fig. 11a bis 11d noch genauer erläutert wird. Des Weiteren weist das Lager 10 jeweils seitlich ein Elastomer 15 auf, das bei diesem Ausführungsbeispiel an den Wälzkörper 13 anvulkanisiert ist, und dem Wälzkörper 13 gegen Herausfallen sichert, insbesondere gegen ein seitliches Herausfallen. Dabei muss das Elastomer 15 nicht mit dem Wälzkörper 13 verbunden sein, dies ist jedoch besonders vorteilhaft.

Bei diesem Ausführungsbeispiel ist die Elastomerschicht 14, welche einen Ausgleich einer Veränderung der Lagerhöhe ermöglicht und das Elastomer 15, welches die beiden Lagerplatten 11 und 12 miteinander verbindet und den Wälzkörper 13 gegen Herausfallen sichert, einstückig ausgebildet, d.h. umlaufend.

Bei diesem Ausführungsbeispiel sind sowohl die Kontaktfläche 1 1a der oberen Lagerplatte 11 als auch die Kontaktfläche 11b der unteren Lagerplatte 12 eben ausgebildet. Ferner weist das Lager 10 entsprechende, hohle Zwischenräume 16 auf, so dass das Abwälzen des Wälzkörpers 13 nicht durch das Elastomer 15 behindert wird und eine entsprechende Ausgleichsbewegung des Lagers 10 ermöglicht wird.

Dadurch, dass die beiden Lagerplatten 11 und 12 jeweils nur über das Elastomer 15 miteinander verbunden sind, können die Lagerplatten 11 und 12 außerdem zueinander geneigt werden. Ist das Lager 10 mit seiner Unterseite beispielsweise auf einer Querblattfeder befestigt, wie beispielsweise in den Fig. 8 bis 10, und mit seiner Oberseite am Fahrzeugaufbau, kann die untere Lagerplatte 12 bei einer Biegung der Querblattfeder der Neigung der Querblattfeder folgen, vgl. Fig. 11a bis 11d. Dadurch kann eine Biegung der Querblattfeder noch besser ausgeglichen werden.

Bei dem in Fig. 2 dargestellten erfindungsgemäßen Lager 20 handelt es sich ebenfalls um ein Rollenlager, wobei bei diesem Ausführungsbeispiel, im Unterschied zu dem anhand von Fig. 1 beschriebenen, erfindungsgemäßen Lager 10, der Wälzkörper 23 keine zylindrische Rolle ist, sondern eine "Rolle" mit einem ovalen Querschnitt. Der ovale Querschnitt des Wälzkörpers 23 hat eine andere Abwälzkurve zur Folge, so dass bei entsprechender Ausgestaltung der Geometrie des Wälzkörpers 23 eine Veränderung des Abstands der Lagerplatten 11 und 12 zueinander und damit der Lagerhöhe beeinflusst werden kann. Selbstverständlich ist es auch denkbar, den Wälzkörper 23 nicht wie in der hier gezeigten Darstellung derart anzuordnen, dass sich in einem Ruhezustand des Lagers der größte Durchmesser des Wälzkörpers 23 senkrecht zu den Kontaktflächen 11a, 12a erstreckt, sondern parallel zu diesen, d.h. um 90° verdreht.

Fig. 3 zeigt ein drittes Ausführungsbeispiel eines erfindungsgemäßen Lagers 30, wobei bei diesem ein Ausführungsbeispiel der Wälzkörper 33 einen tropfen- bzw. nockenförmigen Querschnitt aufweist.

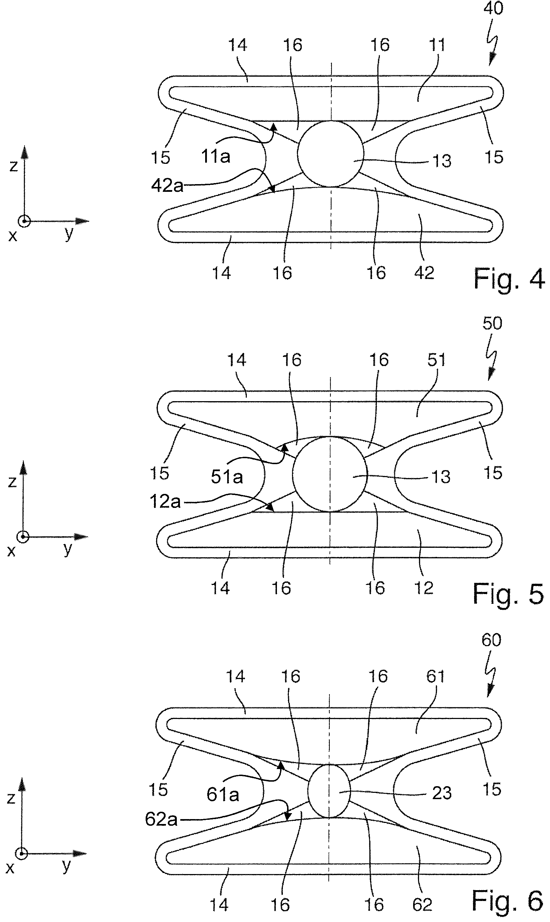

Fig. 4 zeigt ein weiteres Ausführungsbeispiel eines erfindungsgemäßen Lagers 40, dass sich von den zuvor beschrieben und in den Fig. 1 bis 3 dargestellten Lagern 10, 20 und 30 darin unterscheidet, dass bei dem Lager 40 die untere Lagerplatte 42 keine ebene Kontaktfläche 42a aufweist, sondern eine konvex gekrümmte Kontaktfläche 42a. Mit einer derartig gekrümmten Kontaktfläche 42a kann bei entsprechender Ausgestaltung der unteren Lagerplatte 42 oder der oberen Lagerplatte 11 ein "Pumpen" des Lagers 40 kompensiert und damit vermieden werden.

Fig. 5 zeigt ein fünftes Ausführungsbeispiel eines erfindungsgemäßen Lagers 50, wobei bei diesem Ausführungsbeispiel die obere Lagerplatte 51 eine konkav gekrümmte Kontaktfläche 51a aufweist.

Fig. 6 zeigt jeweils ein weiteres Ausführungsbeispiel eines erfindungsgemäßen Lagers 60, wobei bei diesem Ausführungsbeispiel die obere Lagerplatte 61 und die untere Lagerplatte 62 jeweils eine konvex gekrümmte Kontaktfläche 61a bzw 62a aufweisen und der Wälzkörper 23 einen ovalförmigen Querschnitt. Selbstverständlich sind alle möglichen Kombinationen von Wälzkörpergeometrien und Krümmungen der Kontaktflächen denkbar.

Fig. 7 zeigt ein siebtes Ausführungsbeispiel eines erfindungsgemäßen Lagers 70, allerdings in einem Schnitt in Fahrzeuglängsrichtung, d.h. in x-Richtung, bezogen auf einen funktionsgemäßen Einbauzustand. Bei diesem Lager 70 ist der Wälzkörper 73 dabei nicht zylinder- oder rollenförm ig ausgebildet oder dergleichen sondern hantelförmig und weist jeweils in seinen Endbereichen einen größeren (Außen)durchmesser auf als in einem Bereich dazwischen, in welchem er an den Kontaktflächen 11a, 12a der oberen Lagerplatte 11 und der unteren Lagerplatte 12 abwälzen kann. Wie unter anderem Lager 10 (siehe Fig. 1) weist auch dieses Lager 70 jeweils auf den von den Kontaktflächen 11a, 12a abgewandten Seiten der Lagerplatten 11 und 12 jeweils eine Elastomerschicht 14 auf sowie jeweils seitlich ein Elastomer 15, um den Wälzkörper 72 gegen seitliches Herausfallen zu sichern. In diesem Fall ist das Elastomer 15 jedoch nicht am Wälzkörper 72 anvulkanisiert, denn der Wälzkörper 73 bildet bereits durch seine hantelförmige Ausgestaltung mit den Lagerplatten 11 und 12 einen Formschluss und ist dadurch gegen ein Herausfallen in Längsrichtung, d.h. in x-Richtung, gesichert.

Fig. 8 zeigt ein Ausführungsbeispiel einer Lageranbindung 100 einer Querblattfeder 80 mit zwei erfindungsgemäßen Lagern 10 für eine hier nicht weiter dargestellte, erfindungsgemäße Achse mit einer Querblattfeder 80, wobei bei diesem Ausführungsbeispiel die Querblattfeder 80 mittels zweier außermittig, d.h. außerhalb der Fahrzeugmitte, angeordneten Lagerpaaren mit jeweils zwei unmittelbar übereinander angeordneten, erfindungsgemäßen Lagern 10 am Fahrzeugaufbau angebunden werden kann.

Fig. 9 zeigt einen vergrößerten Ausschnitt der in Fig. 8 dargestellten Lageranbindung 100. Dabei sind die beiden erfindungsgemäßen Lager 10 jeweils unmittelbar übereinander angeordnet und die Querblattfeder 80 erstreckt sich zwischen den beiden Lagern 10, wobei die Lager 10 jeweils durch Kleben auf der Querblattfeder befestigt sind, d.h. die Lager 10 sind auf die Querblattfeder aufgeklebt. Selbstverständlich können die Lager 10 auch jeweils mit ihrer Elastomerschicht 14 auf die Querblattfeder 80 aufvulkanisiert werden oder mittels einer Klemmvorrichtung oder dergleichen gehalten werden.

Die Lager 10 sind jeweils derart zur Querblattfeder 80 orientiert, dass die in dieser Darstellung der Übersichtlichkeit halber nicht näher bezeichneten Wälzkörper der Lager 10 jeweils mit ihrer Längsachse in Fahrzeuglängsrichtung angeordnet sind und damit rechtwinklig zu der sich in Fahrzeugquerrichtung verlaufenden Querblattfeder 80, bezogen auf einen funktionsgemäßen Einbauzustand der Lager 10 bzw. einer erfindungsgemäßen Achse mit einer mittels erfindungsgemäßer Lager 10 angebundenen Querblattfeder 80. Dadurch können die Wälzkörper um eine Achse parallel zur Fahrzeuglängsrichtung bzw. zur x-Achse rotieren und auf den Kontaktflächen der Lagerplatten in Fahrzeugquerrichtung abwälzen und die Durchbiegung der Querblattfeder 80 sowie eine seitliche Bewegung bzw. Verschiebung der Querblattfeder 80 infolge der Durchbiegung der Querblattfeder 80 kann besonders vorteilhaft ausgeglichen werden. Selbstverständlich kann die Querblattfeder 80 entgegen dieser Darstellung auch leicht geneigt bzw. gekippt um die y-Achse angeordnet werden, so dass die Längsachse der Wälzkörper nicht parallel zur Fahrbahnebene verläuft, sondern schräg zu dieser, jedoch parallel zu einer XZ-Ebene, d.h. zwar in Fahrzeuglängsrichtung, jedoch über die Fahrzeuglänge von oben nach unten bzw. von unten nach oben.

Fig. 10 zeigt in vergrößerter Darstellung einen Schnitt durch eine entsprechende Lageranbindung einer Querblattfeder 80 mit einem Lagerpaar mit zwei übereinander angeordneten, erfindungsgemäßen Lagern 10, wobei zur Anbindung am Fahrzeugaufbau ein Halter 90 bzw. ein Haltebügel 90 vorgesehen ist, welcher C förmig die beiden Lager 10 und die sich dazwischen erstreckende Querblattfeder umschließt und der am nicht dargestellten Fahrzeugbau befestigt werden kann. Bei entsprechender Ausgestaltung der Halterung 90 kann das "Pumpen" der Lager 10, d.h. die Veränderung des Abstands jeweils zwischen der oberen Lagerplatte 11 und der unteren Lagerplatte 12 bzw. deren Kontaktflächen 11a und 12a, auch durch die Halterung ausgeglichen werden, beispielsweise in dem der C-förmige Haltebügel 90 entsprechend federnd bzw. nachgiebig ausgestaltet ist.

Fig. 11a bis 11d zeigen jeweils einen Schnitt in Fahrzeugquerrichtung durch zwei erfindungsgemäße Lager 10 sowie eine dazwischen aufgenommene Querblattfeder 80 in verschiedenen Verformungszuständen der Querblattfeder 80 und damit die Lager 10 in verschiedenen Ausgleichszuständen. Dabei sind die Lager 10 der besseren Übersichtlichkeit halber jeweils ohne das seitliche Elastomer 15 dargestellt und die obere und die untere Elastomerschicht 14 ist jeweils nur in Fig. 11a schematisch angedeutet und mit 14' bezeichnet. In den Fig. 11b bis 11d sind die Elastomerschichten 14 hingegen nicht dargestellt.

Die Fig. 11a und 11b zeigen jeweils schematisch und skizzenhaft die Lageranbindung einer Querblattfeder 80 mittels zweier unmittelbar übereinander angeordneter erfindungsgemäßer Lager 10 in einem unbelasteten Zustand, d.h. nicht in einem Ausgleichszustand, während in den Fig. 11c und 11d die Lager 10 jeweils in einem Ausgleichszustand dargestellt sind.

Im unbelasteten Zustand der Lager 10 (siehe Fig. 11a und 11b) schneiden die Kontaktlinien, welche senkrecht zur Zeichenebene verlaufen und entlang derer die Wälzkörper 13 jeweils die Kontaktflächen 11a und 12a der Lagerplatten 11 und 12 kontaktieren, jeweils die Lagerachsen 17. Bei Wälzkörpern 13 mit einem kreisrunden Querschnitt, wie bei den hier beispielhaft gezeigten Lagern 10, stellt sich in diesem Zustand jeweils ein Abstand h₁ bzw. h₂ zwischen der Kontaktfläche 11a der oberen Lagerplatte 11 und der Kontaktfläche 12a der unteren Lagerplatte 12 ein, der jeweils genau dem Durchmesser d₁ bzw. d₂ des Wälzkörpers 13 entspricht.

Biegt sich nun die Querblattfeder 80, d.h. verändert sich die Neigung einer Mittelebene 18 der Querblattfeder 80 im Bereich der Lager 10, neigt sich die Mittelebene 18 der Querblattfeder um einen Winkel α. Dabei folgen die untere Lagerplatte 12 des oberen Lagers 10 und die obere Lagerplatte 11 des unteren Lagers 10, da sie mit der Querblattfeder verbunden sind, der Biegung der Querblattfeder 80 und die Wälzkörper 13 wälzen jeweils auf den nun ebenfalls geneigten Kontaktflächen 11a und 12a der Lagerplatten 11 und 12 ab. D.h. die Wälzkörper rotieren um ihre Längsachse, die sich in einer XZ-Ebene, insbesondere parallel zur x-Achse, in Fahrzeuglängsrichtung erstreckt.

Durch das Neigen der Lagerplatten 12 bzw. 11 bzw. der zugehörigen Kontaktflächen 11a und 12a bewegen sich die Wälzkörper 13 zur Seite, d.h. ihr Mittelpunkt fällt nicht mehr mit der Lagerachse 17 zusammen. Dies hat zur Folge, dass sich der (maximale) Durchmesser d₁ bzw. d₂ der Wälzkörper 13 nicht mehr entlang der Lagerachse 17 erstreckt, sondern leicht zu dieser versetzt ist. Dadurch verändert sich entlang der Lagerachse der Abstand h₁ bzw. h₂, wobei der Abstand in diesem Fall kleiner wird, d.h. h_{1,2}< d_{1,2} aufgrund des abnehmenden Durchmessers der Wälzkörper 13 im Bereich der Lagerachse 17.

Bei einer weiteren Zunahme des Winkels α zu einem Winkel α' wird dieser Effekt noch weiter verstärkt und der Abstand h₁ bzw. h₂ zwischen den Kontaktflächen 11a und 12a verringert sich entlang der Lagerachse 17 jeweils noch weiter auf einen Abstand h₁' bzw. h₂', d.h. h_{1,2}' < h_{1,2} < d_{1,2}.

Bewegt sich die Querblattfeder 80 wieder in ihre Ausgangslage zurück, vergrößert sich der Abstand h₁ bzw. h₂ wieder, bei diesem Ausführungsbeispiel auf die maximalen Durchmesser d₁ bzw. d₂.

Diese Veränderung des Abstands h₁ bzw. h₂ führt somit, insbesondere bei einem abwechselnden Biegen und Zurückbiegen der Querblattfeder 80, zu dem zuvor beschriebenen "Pumpen" der Lager 10, insbesondere in Fahrzeughochrichtung, d.h. in z-Richtung, bezogen auf einen funktionsgemäßen Einbauzustand.

Um eine Verspannung der Lager 10 und insbesondere der Querblattfeder 80 zu vermeiden, welche sich nachteilig auf das Federverhalten der Querblattfeder 80 auswirken kann, sollte dieses "Pumpen" der Lager 10 vermieden bzw. kompensiert werden.

Als besonders vorteilhaft hat sich dabei eine auf den von den Kontaktflächen der Lagerplatten 11 und 12 aufgebrachte Elastomerschicht 14 bzw. 14, vgl. Fig. 1 bis 6, erwiesen, welche entsprechend weich ausgestaltet sein sollte, damit sie entsprechend nachgiebig ist und die Veränderung des Abstands h₁ bzw. h₂ der Kontaktflächen 11a und 12a zueinander ausgleichen kann.

Zusätzlich kann die Veränderung des Abstandes der Kontaktflächen der beiden Lagerplatten, wie bereits zuvor anhand der in den Fig. 2 bis 6 gezeigten Ausführungsbeispiele beschrieben worden ist, durch eine entsprechende Abstimmung der Geometrie von Wälzkörper und Krümmung der Kontaktflächen oder durch eine Kombination daraus teilweise ausgeglichen bzw. kompensiert werden. Dabei kann durch eine vorteilhafte Ausgestaltung von Wälzkörper und Kontaktfläche, insbesondere durch eine Abstimmung von Wälzkörper und Kontaktflächen, in einigen Fällen das "Pumpen" des Lagers, d.h. die Veränderung des Abstandes der Kontaktflächen zueinander entlang der Lagerachse vermieden werden.

Selbstverständlich ist es ebenfalls möglich, den Ausgleich des "Pumpens" des Lagers durch eine Kombination aus einem entsprechend ausgestalteten Halter, einer Elastomerschicht und/oder einem entsprechend ausgestalteten Lager mit einem entsprechend ausgestalteten Wälzkörper sowie entsprechend gekrümmten Kontaktflächen herbeizuführen.

Selbstverständlich ist eine Vielzahl an Abwandlungen, insbesondere von konstruktiven Abwandlungen, zu dem erläuterten Ausführungsbeispiel möglich, ohne den Inhalt der Patentansprüche zu verlassen.

### Bezugszeichenliste:

- 10, 20, 30, 40, 50, 60, 70: erfindungsgemäßes Lager
- 11, 51, 61: obere Lagerplatte
- 11a, 51 a, 61a: Kontaktfläche der oberen Lagerplatte
- 12, 42, 62: untere Lagerplatte
- 12a, 42a, 62a: Kontaktfläche der unteren Lagerplatte
- 13, 23, 33, 73: Wälzkörper
- 14: Elastomerschicht
- 15: Elastomer
- 16: Zwischenraum
- 17: Lagerachse
- 18: Mittelebene der Querblattfeder
- 80: Querblattfeder
- 90: Halterung
- 100, 200: Lageranbindung einer Querblattfeder

- α, α': Neigungswinkel der Mittelebene der Querblattfeder
- h₁, h₂, h₁', h₂': Abstand zwischen den Kontaktflächen
- d₁, d₂: Wälzkörper-Durchmesser

## Patentansprüche

1. Lager (10, 20, 30, 40, 50, 60, 70) zur Anbindung einer Querblattfeder (80), insbesondere einer seitlich und/oder in Fahrzeuglängsrichtung nicht-radführenden Querblattfeder (80), in einem zweispurigen Kraftfahrzeug im Bereich einer Fahrzeugachse, wobei das Lager (10, 20, 30, 40, 50, 60, 70) derart ausgebildet ist, dass es in einem funktionsgemäßen Einbauzustand in einem Fahrzeug, zumindest innerhalb gewisser Grenzen, einen Ausgleich einer Bewegung der Querblattfeder (80) ermöglicht, insbesondere einer Biegung und/oder einer Bewegung in Fahrzeuglängs- und/oder Fahrzeugquerrichtung, und eine Abstützung der Querblattfeder (80) am Fahrzeugaufbau in Fahrzeughochrichtung,
wobei das Lager (10, 20, 30, 40, 50, 60, 70), bezogen auf einen funktionsgemäßen Einbauzustand in einem Kraftfahrzeug, eine obere Lagerplatte (11, 51, 61) mit einer Kontaktfläche (11a, 51, 61a), eine untere Lagerplatte (12, 42, 62) mit einer Kontaktfläche (12a, 42a, 62a) und einen zwischen der oberen (11, 51, 61) und der unteren Lagerplatte angeordneten Wälzkörper (13, 23, 33) aufweist, und wobei der Wälzkörper (13, 23, 33) in einem funktionsgemäßen Einbauzustand des Lagers (10, 20, 30, 40, 50, 60, 70) in einem Fahrzeug zum Ausgleich einer Bewegung der Querblattfeder (80) auf der Kontaktfläche (11a, 12a, 42a, 51a, 61a, 62a) der jeweiligen Lagerplatte (11, 12, 42, 51, 61, 62) abwälzt,
wobei das Lager (10, 20, 30, 40, 50, 60, 70) auf der von der Kontaktfläche (11a, 12a, 42a, 51a, 61a, 62a) abgewandten Seite der jeweiligen Lagerplatte (11, 12, 42, 51, 61, 62) eine Elastomerschicht (14, 14') aufweist, welche ausgebildet ist, in einem funktionsgemäßen Einbauzustand des Lagers (10, 20, 30, 40, 50, 60, 70) in einem Fahrzeug einen Ausgleich einer Veränderung eines Abstandes (h₁, h₂, h₁', h₂') der beiden Lagerplatten (11, 12, 42, 51, 61, 62) zueinander infolge einer Bewegung der Querblattfeder (80) zu ermöglichen,
wobei die obere Lagerplatte (11, 51, 61) und die untere Lagerplatte (12, 42, 62) nur durch ein Elastomer (15) miteinander verbunden sind,
wobei das Lager (10) jeweils seitlich das Elastomer (15) aufweist, wobei das seitliche Elastomer (15) dazu ausgebildet ist, den Wälzkörper (13, 23, 33) seitlich gegen Herausfallen zu sichern,
wobei der Wälzkörper (13, 23, 33) gegen Herausfallen gesichert angeordnet ist
und wobei das Lager (10) als Rollenlager und als bewegliches Linienlager ausgebildet ist,
**dadurch gekennzeichnet, dass**
das Lager (10, 20, 30, 40, 50, 60, 70) zwischen dem Elastomer (15) und dem Wälzkörper (13, 23, 33) geschlossene, hohle Zwischenräume (16) aufweist, welche derart ausgebildet sind, dass ein Abwälzen des Wälzkörpers (13, 23, 33) nicht durch das Elastomer (15) behindert wird und eine entsprechende Ausgleichsbewegung des Lagers (10, 20, 30, 40, 50, 60, 70) ermöglicht wird.

2. Lager (10, 20, 30, 40, 50, 60, 70) nach Anspruch 1, **dadurch gekennzeichnet, dass** die Elastomerschicht (14, 14'), welche einen Ausgleich einer Veränderung des Abstandes (h₁, h₂, h₁', h₂') der beiden Lagerplatten (11, 12, 42, 51, 61, 62) zueinander infolge einer Bewegung der Querblattfeder (80) ermöglicht, und das Elastomer (15), welches die Lagerplatten (11, 12, 42, 51, 61, 62) miteinander verbindet, einstückig ausgebildet sind.

3. Lager (10, 20, 30, 40, 50, 60, 70) nach einem der vorgenannten Ansprüche, **dadurch gekennzeichnet, dass** das Lager (10, 20, 30, 40, 50, 60, 70) mit einer vom Wälzkörper (13, 23, 33) abgewandten Seite der einen Lagerplatte (11, 51, 61; 12, 42, 62) zur Anbindung an der Querblattfeder (80) ausgebildet ist und mit einer vom Wälzkörper (13, 23, 33) abgewandten Seite der anderen Lagerplatte (11, 51, 61; 12, 42, 62) vorzugsweise zur Anbindung am Fahrzeugaufbau.

4. Lager (10, 20, 30, 40, 50, 60, 70) nach einem der vorgenannten Ansprüche, **dadurch gekennzeichnet, dass** das Lager (10, 20, 30, 40, 50, 60, 70) mit der Querblattfeder (80) fest verbindbar ist, vorzugsweise durch aufvulkanisieren oder kleben.

5. Achse für Räder eines zweispurigen Kraftfahrzeugs, wobei die Achse eine Querblattfeder (80) aufweist und die Querblattfeder (80) mittels wenigstens eines Lagers (10, 20, 30, 40, 50, 60, 70) angebunden ist, vorzugsweise am Fahrzeugaufbau, **dadurch gekennzeichnet, dass** das Lager (10, 20, 30, 40, 50, 60, 70) nach einem der Ansprüche 1 bis 4 ausgebildet ist.

6. Achse nach Anspruch 5, **dadurch gekennzeichnet, dass** die Achse wenigstens zwei Lager (10, 20, 30, 40, 50, 60, 70) aufweist, die jeweils nach einem der Ansprüche 1 bis 5 ausgebildet sind, wobei vorzugsweise zwei Lager (10, 20, 30, 40, 50, 60, 70) ein Lagerpaar bilden und in einem funktionsgemäßen Einbauzustand der Achse in einem zweispurigen Fahrzeug eines der Lager (10, 20, 30, 40, 50, 60, 70) des Lagerpaars oberhalb der Querblattfeder (80) angeordnet ist und das andere Lager (10, 20, 30, 40, 50, 60, 70) unterhalb der Querblattfeder (80) und die Querblattfeder (80) sich zwischen den Lagern (10, 20, 30, 40, 50, 60, 70) in Fahrzeugquerrichtung hindurch erstreckt.

7. Achse nach Anspruch 6, **dadurch gekennzeichnet, dass** die Achse wenigstens vier Lager (10, 20, 30, 40, 50, 60, 70) aufweist, die nach einem der Ansprüche 1 bis 5 ausgebildet sind, wobei jeweils zwei Lager (10, 20, 30, 40, 50, 60, 70) ein Lagerpaar bilden und unmittelbar übereinander angeordnet sind und sich die Querblattfeder (80) jeweils zwischen den zwei Lagern (10, 20, 30, 40, 50, 60, 70) eines Lagerpaares hindurcherstreckt, wobei die beiden Lagerpaare vorzugsweise außermittig angeordnet sind, insbesondere symmetrisch zu einer Fahrzeugmitte.

## Claims

1. Bearing (10, 20, 30, 40, 50, 60, 70) for the attachment of a transverse leaf spring (80), in particular a transverse leaf spring (80) which does not control a wheel laterally and/or in the vehicle longitudinal direction, in a double-track motor vehicle in the region of a vehicle axle, the bearing (10, 20, 30, 40, 50, 60, 70) being configured in such a way that, in a functional installed state in a vehicle, it makes a compensation of a movement of a movement of the transverse leaf spring (80) possible, at least within certain limits, in particular a deflection and/or a movement in the vehicle longitudinal direction and/or vehicle transverse direction, and a support of the transverse leaf spring (80) on the vehicle body in the vehicle vertical direction,
the bearing (10, 20, 30, 40, 50, 60, 70) having, in relation to a functional installed state in a motor vehicle, an upper bearing plate (11, 51, 61) with a contact face (11a, 51, 61a), a lower bearing plate (12, 42, 62) with a contact face (12a, 42a, 62a), and a rolling body (13, 23, 33) which is arranged between the upper (11, 51, 61) and the lower bearing plate, and the rolling body (13, 23, 33) rolling, in a functional installed state of the bearing (10, 20, 30, 40, 50, 60, 70) in a vehicle, in order to compensate for a movement of the transverse leaf spring (80) on the contact face (11a, 12a, 42a, 51a, 61a, 62a) of the respective bearing plate (11, 12, 42, 51, 61, 62),
the bearing (10, 20, 30, 40, 50, 60, 70) having an elastomer layer (14, 14') on that side of the respective bearing plate (11, 12, 42, 51, 61, 62) which faces away from the contact face (11a, 12a, 42a, 51a, 61a, 62a), which elastomer layer (14, 14') is configured to make, in a functional installed state of the bearing (10, 20, 30, 40, 50, 60, 70) in a vehicle, a compensation of a change in a spacing (h₁, h₂, h₁' , h₂') of the two bearing plates (11, 12, 42, 51, 61, 62) with respect to one another as a consequence of a movement of the transverse leaf spring (80) possible,
the upper bearing plate (11, 51, 61) and the lower bearing plate (12, 42, 62) being connected to one another only by way of an elastomer (15),
the bearing (10) comprising the elastomer (15) in each case laterally, the lateral elastomer (15) being configured to secure the rolling body (13, 23, 33) laterally against falling out,
the rolling body (13, 23, 33) being arranged in a manner which is secured against falling out,
and the bearing (10) being configured as a roller bearing and as a movable linear bearing,
**characterized in that**
the bearing (10, 20, 30, 40, 50, 60, 70) has closed, hollow intermediate spaces (16) between the elastomer (15) and the rolling body (13, 23, 33), which intermediate spaces (16) are configured in such a way that rolling of the rolling body (13, 23, 33) is not impeded by way of the elastomer (15) and a corresponding compensation movement of the bearing (10, 20, 30, 40, 50, 60, 70) is made possible.

2. Bearing (10, 20, 30, 40, 50, 60, 70) according to Claim 1, **characterized in that** the elastomer layer (14, 14'), which makes a compensation of a change in the spacing (h₁, h₂, h₁', h₂') of the two bearing plates (11, 12, 42, 51, 61, 62) with respect to one another as a consequence of a movement of the transverse leaf spring (80) possible, and the elastomer (15), which connects the bearing plates (11, 12, 42, 51, 61, 62) to one another, are configured in one piece.

3. Bearing (10, 20, 30, 40, 50, 60, 70) according to either of the preceding claims, **characterized in that** the bearing (10, 20, 30, 40, 50, 60, 70) is configured with a side of the one bearing plate (11, 51, 61; 12, 42, 62), which side faces away from the rolling body (13, 23, 33), for the attachment to the transverse leaf spring (80), and with a side of the other bearing plate (11, 51, 61; 12, 42, 62), which sides faces away from the rolling body (13, 23, 33), preferably for the attachment to the vehicle body.

4. Bearing (10, 20, 30, 40, 50, 60, 70) according to one of the preceding claims, **characterized in that** the bearing (10, 20, 30, 40, 50, 60, 70) can be connected fixedly to the transverse leaf spring (80), preferably by way of being vulcanized on or adhesive bonding.

5. Axle for wheels of a double-track motor vehicle, the axle having a transverse leaf spring (80), and the transverse leaf spring (80) being attached by means of at least one bearing (10, 20, 30, 40, 50, 60, 70), preferably to the vehicle body, **characterized in that** the bearing (10, 20, 30, 40, 50, 60, 70) is configured according to one of Claims 1 to 4.

6. Axle according to Claim 5, **characterized in that** the axle has at least two bearings (10, 20, 30, 40, 50, 60, 70) which are in each case configured according to one of Claims 1 to 5, two bearings (10, 20, 30, 40, 50, 60, 70) preferably forming a bearing pair, and, in a functional installed state of the axle in a double-track vehicle, one of the bearings (10, 20, 30, 40, 50, 60, 70) of the bearing pair being arranged above the transverse leaf spring (80), and the other bearing (10, 20, 30, 40, 50, 60, 70) being arranged below the transverse leaf spring (80), and the transverse leaf spring (80) extending through in the vehicle transverse direction between the bearings (10, 20, 30, 40, 50, 60, 70).

7. Axle according to Claim 6, **characterized in that** the axle has at least four bearings (10, 20, 30, 40, 50, 60, 70) which are configured according to one of Claims 1 to 5, in each case two bearings (10, 20, 30, 40, 50, 60, 70) forming a bearing pair and being arranged directly above one another, and the transverse leaf spring (80) extending in each case between the two bearings (10, 20, 30, 40, 50, 60, 70) of a bearing pair, the two bearing pairs preferably being arranged eccentrically, in particular symmetrically with respect to a vehicle centre.

## Revendications

1. Palier (10, 20, 30, 40, 50, 60, 70) pour la liaison d'un ressort à lame transversal (80), notamment d'un ressort à lame transversal (80) ne guidant pas les roues latéralement et/ou dans la direction longitudinale du véhicule, dans un véhicule à moteur à deux voies dans la zone d'un essieu de véhicule, le palier (10, 20, 30, 40, 50, 60, 70) étant configuré de telle sorte qu'il permet, dans un état de montage fonctionnel dans un véhicule, au moins dans certaines limites, une compensation d'un mouvement du ressort à lame transversal (80), notamment d'une flexion et/ou d'un mouvement dans la direction longitudinale du véhicule et/ou transversale du véhicule, et un support du ressort à lame transversal (80) sur la carrosserie du véhicule dans la direction de hauteur du véhicule,
le palier (10, 20, 30, 40, 50, 60, 70) comprenant, par rapport à un état de montage fonctionnel dans un véhicule à moteur, une plaque de palier supérieure (11, 51, 61) munie d'une surface de contact (11a, 51, 61a), une plaque de palier inférieure (12, 42, 62) munie d'une surface de contact (12a, 42a, 62a) et un corps de roulement (13, 23, 33) agencé entre la plaque de palier supérieure (11, 51, 61) et inférieure, et le corps de roulement (13, 23, 33) roulant, dans un état de montage fonctionnel du palier (10, 20, 30, 40, 50, 60, 70) dans un véhicule, pour la compensation d'un mouvement du ressort à lame transversal (80), sur la surface de contact (11a, 12a, 42a, 51a, 61a, 62a) de chaque plaque de palier (11, 12, 42, 51, 61, 62),
le palier (10, 20, 30, 40, 50, 60, 70) comprenant, sur le côté détourné de la surface de contact (11a, 12a, 42a, 51a, 61a, 62a) de chaque plaque de palier (11, 12, 42, 51, 61, 62), une couche d'élastomère (14, 14'), qui est configurée pour permettre, dans un état de montage fonctionnel du palier (10, 20, 30, 40, 50, 60, 70) dans un véhicule, une compensation d'une modification d'un écart (h₁, h₂, h₁', h₂') des deux plaques de palier (11, 12, 42, 51, 61, 62) l'une par rapport à l'autre en conséquence d'un mouvement du ressort à lame transversal (80),
la plaque de palier supérieure (11, 51, 61) et la plaque de palier inférieure (12, 42, 62) étant reliées l'une à l'autre uniquement par un élastomère (15),
le palier (10) comprenant à chaque fois latéralement l'élastomère (15), l'élastomère latéral (15) étant configuré pour protéger latéralement le corps de roulement (13, 23, 33) contre une chute,
le corps de roulement (13, 23, 33) étant agencé d'une manière protégée contre une chute,
et le palier (10) étant configuré en tant que palier à rouleaux et en tant que palier linéaire mobile,
**caractérisé en ce que**
le palier (10, 20, 30, 40, 50, 60, 70) comprend entre l'élastomère (15) et le corps de roulement (13, 23, 33) des espaces intermédiaires creux fermés (16), qui sont configurés de telle sorte qu'un roulement du corps de roulement (13, 23, 33) ne soit pas entravé par l'élastomère (15) et qu'un mouvement de compensation correspondant du palier (10, 20, 30, 40, 50, 60, 70) soit possible.

2. Palier (10, 20, 30, 40, 50, 60, 70) selon la revendication 1, **caractérisé en ce que** la couche d'élastomère (14, 14'), qui permet une compensation d'une modification de l'écart (h₁, h₂, h₁', h₂') des deux plaques de palier (11, 12, 42, 51, 61, 62) l'une par rapport à l'autre en conséquence d'un mouvement du ressort à lame transversal (80), et l'élastomère (15), qui relie l'une à l'autre les plaques de palier (11, 12, 42, 51,61, 62), sont configurés d'un seul tenant.

3. Palier (10, 20, 30, 40, 50, 60, 70) selon l'une quelconque des revendications précédentes, **caractérisé en ce que** le palier (10, 20, 30, 40, 50, 60, 70) est configuré avec un côté détourné du corps de roulement (13, 23, 33) d'une plaque de palier (11, 51, 61 ; 12, 42, 62) pour la liaison au ressort à lame transversal (80) et avec un côté détourné du corps de roulement (13, 23, 33) de l'autre plaque de palier (11, 51, 61 ; 12, 42, 62) de préférence pour la liaison à la carrosserie de véhicule.

4. Palier (10, 20, 30, 40, 50, 60, 70) selon l'une quelconque des revendications précédentes, **caractérisé en ce que** le palier (10, 20, 30, 40, 50, 60, 70) peut être relié de manière fixe avec le ressort à lame transversal (80), de préférence par vulcanisation ou collage.

5. Essieu pour roues d'un véhicule à moteur à deux voies, l'essieu comprenant un ressort à lame transversal (80) et le ressort à lame transversal (80) étant relié au moyen d'au moins un palier (10, 20, 30, 40, 50, 60, 70), de préférence à la carrosserie de véhicule, **caractérisé en ce que** le palier (10, 20, 30, 40, 50, 60, 70) est configuré selon l'une quelconque des revendications 1 à 4.

6. Essieu selon la revendication 5, **caractérisé en ce que** l'essieu comprend au moins deux paliers (10, 20, 30, 40, 50, 60, 70), qui sont chacun configurés selon l'une quelconque des revendications 1 à 5, deux paliers (10, 20, 30, 40, 50, 60, 70) formant de préférence une paire de paliers et, dans un état de montage fonctionnel de l'essieu dans un véhicule à deux voies, un des paliers (10, 20, 30, 40, 50, 60, 70) de la paire de paliers étant agencé au-dessus du ressort à lame transversal (80) et l'autre palier (10, 20, 30, 40, 50, 60, 70) en dessous du ressort à lame transversal (80) et le ressort à lame transversal (80) s'étendant entre les paliers (10, 20, 30, 40, 50, 60, 70) dans la direction transversale du véhicule.

7. Essieu selon la revendication 6, **caractérisé en ce que** l'essieu comprend au moins quatre paliers (10, 20, 30, 40, 50, 60, 70), qui sont configurés selon l'une quelconque des revendications 1 à 5, deux paliers (10, 20, 30, 40, 50, 60, 70) formant à chaque fois une paire de paliers et étant agencés directement les uns au-dessus des autres et le ressort à lame transversal (80) s'étendant à chaque fois entre les deux paliers (10, 20, 30, 40, 50, 60, 70) d'une paire de paliers, les deux paires de paliers étant de préférence agencées de manière excentrée, notamment symétriquement à un milieu du véhicule.
